# FASCICULE DE BREVET EUROPEEN

(11) **EP 2 552 670 B1**
(45) Date de publication et mention de la délivrance du brevet: **26.11.2014**
(21) Numéro de dépôt: 11715967.3
(22) Date de dépôt: 22.03.2011
(51) Int. Cl.: B29C 49/42, B65G 47/90

(54) **DISPOSITIF DE PREHENSION POUR PREFORME DE SOUFFLAGE DE RECIPIENT**
GREIFVORRICHTUNG FÜR EINE BLASFORMBEHÄLTERVORFORM
DEVICE FOR GRIPPING A BLOW-MOULDING CONTAINER PREFORM

(30) Priorité: 29.03.2010 FR 1052302
(43) Date de publication de la demande: 06.02.2013
(73) Titulaire: Sidel Participations, 76930 Octeville sur Mer (FR)
(72) Inventeur: LEROUX, Julien, F-76930 Octeville-sur-Mer (FR); LACAILLE, Franck, F-76930 Octeville-sur-Mer (FR); BERTIN, Pascal, F-76930 Octeville-sur-Mer (FR); DUJARDIN, Willy, F-76930 Octeville-sur-Mer (FR)
(74) Mandataire: Cabinet Plasseraud
(86) Numéro de dépôt international: PCT/FR2011/050600
(87) Numéro de publication internationale: WO 2011/121208

(56) Documents cités:
- EP-A2- 0 357 589
- FR-A1- 2 794 109

## Description

### Objet de l'invention :

L'invention concerne le domaine des dispositifs de préhension d'objets, en particulier d'objets du type des préformes pour la fabrication par soufflage de récipients tels que des bouteilles.

L'invention concerne également les systèmes de convoyage d'objets utilisant de tels dispositifs de préhension, en particulier pour convoyer des préformes thermoplastiques au travers d'un four.

### Etat de la technique :

De telles préformes sont obtenues généralement par injection et présentent un corps cylindrique tubulaire fermé à l'une de ses extrémités axiales, et qui est prolongé à son autre extrémité par un col, lui aussi tubulaire. Le col est généralement injecté de manière à posséder déjà sa forme définitive tandis que le corps de la préforme est appelé à subir une déformation relativement importante pour former le récipient final suite à l'opération de soufflage. Le col de la préforme présente souvent une collerette d'appui coopérant avec une pince de préhension ou avec un rail de guidage. Le bord aminci à l'extrémité axiale ouvert du col s'appelle le « buvant » du récipient. La distance axiale entre l'extrémité du buvant et le dessous de la collerette est généralement une distance très précise car elle sert pour le bouchon de fermeture du récipient.

L'opération de soufflage du corps de la préforme nécessite que celui-ci soit porté à une température supérieure à la température de transition vitreuse du matériau. On procède à un conditionnement thermique de la préforme en la faisant circuler à l'intérieur d'un four. Le four comporte des moyens de chauffage qui sont par exemple formés par des lampes à infrarouge dans lesquelles la préforme est déplacée par un système de convoyage.

Les dispositifs de préhension destinés à des systèmes de convoyage traversant un four ne sont généralement pas de simples pinces de serrage car le dispositif de préhension doit permettre d'entraîner l'objet en rotation autour d'un axe. En particulier, il est nécessaire de maîtriser l'alignement de l'axe de la préforme avec l'axe du dispositif de préhension tout au long de son transport dans le four afin d'éviter, lors du chauffage, une disparité pouvant entraîner des déformations gênantes de la préforme.

La demande de brevet WO 2009/018952 décrit un dispositif de préhension de préforme pour machines de soufflage. Le dispositif comprend un mandrin de préhension pénétrant à l'intérieur du col. Le mandrin de préhension présente des mâchoires radialement élastiques retenant la préforme par frottement. Le mandrin décrit présente, en plus, un épaulement fixe par rapport à la tête de mandrin contre lequel le « buvant » du col de la préforme peut s'appuyer. Cet épaulement constitue un siège pour la préforme qui permet d'assurer une bonne perpendicularité entre le buvant de la préforme saisie et l'axe du mandrin de préhension. Cependant, un tel dispositif présente une séquence de relâchement de l'objet saisi complexe à réaliser car le mandrin frotte dans le col. Il faut alors qu'une pièce mécanique, appelée « dévêtisseur » retienne la préforme en fin de convoyage pendant que le mandrin de préhension est retiré axialement du col. Comme l'épaulement du dispositif prend appui sur le buvant de la préforme, il faut, soit que le dévêtisseur prenne appui sur des formes extérieures du col, moins précises que le buvant, soit que le dévêtisseur et l'épaulement servant de siège se partagent la surface radiale à l'extrémité du buvant.

Par ailleurs, les préformes devant traverser un four sont amenées dans une position de chargement du système de convoyage traversant le four par des rails de guidage, par des roues équipées de pinces traditionnelles, ou par des roues à encoches. Le plaquage de la collerette de la préforme contre la surface d'appui du rail ou de la pince d'amenée de la préforme est généralement uniquement dû au poids de la préforme. Les cadences très élevées des machines de soufflage font que les préformes oscillent en permanence autour de leur position d'équilibre. Il est donc nécessaire que l'ensemble du moyen de préhension à l'état retiré soit au-dessus du buvant du col de la préforme, d'une valeur d'au moins deux millimètres pour permettre à la préforme d'arriver dans la position où elle devra être saisie, sans que les petites oscillations de cette préforme n'engendrent un coincement contre le moyen de préhension.

Il est également nécessaire de stabiliser la préforme lors de l'introduction du mandrin de préhension dans le col de la préforme.

La demande de brevet FR 2 794 109, décrit un système de convoyage de préformes pour soufflage de récipients en matériaux thermoplastiques. Le système de préhension comprend un tube stabilisateur dans lequel des mâchoires radialement élastiques du mandrin de préhension frottent avant de plonger dans le col de la préforme. Ainsi, le tube stabilisateur est entraîné lors de la descente du mandrin de préhension et plaque la préforme contre la surface d'appui de la collerette de la préforme. Ce tube stabilisateur mobile améliore l'alignement de la préforme et de l'axe de plongée du mandrin de préhension.

Lors du retrait du mandrin de préhension hors du col de la préforme, le tube stabilisateur est également remonté par le frottement du mandrin dans le tube stabilisateur. Le tube est ainsi maintenu au-dessus de la position du buvant pour permettre l'arrivée d'une nouvelle préforme à prendre. Le tube peut servir également de dévêtisseur retenant le col de la préforme lors du retrait du mandrin de préhension.

Cependant un inconvénient du dispositif décrit dans FR 2 797 109 est que le frottement répété toutes les une ou deux secondes du mandrin de préhension dans le même tube stabilisateur peut nécessiter une lubrification, ou bien risque d'entraîner la production d'arrachement de limaille métallique. L'amélioration de la sécurité de la fabrication du récipient conduit à réduire les risques d'abrasion ou de pollution à proximité du récipient.

### Problème technique résolu par l'invention :

L'invention propose un dispositif de préhension d'objets, tel qu'une préforme de soufflage de récipient ainsi qu'un système de convoyage d'objets remédiant aux inconvénients ou répondant aux besoins précités.

Un but de l'invention est de permettre à la fois de maîtriser l'alignement de l'objet avec l'axe du dispositif de préhension, de permettre l'arrivée d'une nouvelle préforme, tout en améliorant la sécurité de l'opération de préhension.

### Description générale de l'invention :

Selon un mode de réalisation, le dispositif de préhension d'un objet tel qu'une préforme de soufflage de récipient, comprend :
- un corps de guidage;
- un corps de butée, monté à translation axiale par rapport au corps de guidage le long d'un axe du dispositif ;
- un support de mandrin, équipé d'un mandrin de préhension, mobile axialement par rapport au corps de guidage et présentant une course de plongée allant d'une position de retrait à une position de plongée dans laquelle le mandrin est apte à prendre l'objet.

Le corps de butée présente, avec le support de mandrin, un système de butées de support agencées de manière que le support de mandrin entraîne axialement le corps de butée sur une partie terminale de la course de plongée.

Le dispositif comprend un moyen de rappel monté entre le corps de guidage et le corps de butée visant à entraîner le corps de butée dans une direction axiale de retrait opposée à la direction de la course de plongée.

On comprend que, sur la partie terminale de la course de plongée, le moyen de rappel maintient fermement le corps de butée plaqué contre le système de butées de support. Le corps de butée et le mandrin sont donc solidaires durant la partie terminale de la course de plongée, et ceci quel que soit le sens de translation du support de mandrin, qu'il aille vers la position de plongée ou en revienne. Par ailleurs, le corps de butée, étant monté en translation le long de l'axe du dispositif, peut servir de référence mécanique pour aligner l'objet à prendre sur l'axe du dispositif. De plus, le moyen de rappel impose le retrait du corps de butée. Cela permet à de nouvelles préformes d'arriver dans une position prête à être saisie sans risquer de se coincer. Le mouvement du corps de butée est assuré sans avoir recours à un frottement avec le mandrin de préhension. Cela améliore la sécurité de l'opération.

Avantageusement, le corps de butée et le corps de guidage comprennent un système de butées de guidage limitant la translation axiale du corps de butée dans la direction de retrait. Cela permet au corps de butée de servir de dévêtisseur. Grâce au système de butée de guidage, le corps de butée peut maintenir la préforme pendant le retrait du mandrin de préhension.

Selon un premier mode particulier de réalisation, le corps de butée et le corps de guidage sont en matériau amagnétique. Le moyen de rappel comprend au moins un aimant permanent monté sur l'un des corps parmi les corps de guidage ou de butée et un élément en matériau magnétique monté sur l'autre corps parmi les corps de guidage ou de butée. L'élément magnétique et l'aimant permanent sont disposés de manière à engendrer une force mécanique axiale sur le corps de butée prenant appui sur le corps de guidage et orientée dans le sens du retrait du corps de butée.

Avantageusement, le moyen de rappel comprend au moins une paire d'aimants de rappel composée d'un premier aimant permanent monté sur le corps de guidage et d'un deuxième aimant permanent monté sur le corps de butée. Les axes magnétiques des premier et deuxième aimants sont perpendiculaires à l'axe du dispositif et situés dans un même demi-plan radial. L'axe magnétique du premier aimant est décalé le long de l'axe du dispositif par rapport à l'axe magnétique du deuxième aimant, dans la direction de plongée si les deux aimants s'attirent et dans la direction de retrait si les deux aimants se repoussent. Lorsque les deux aimants s'attirent, l'attirance a comme effet de réduire le décalage axial. Lorsque les deux aimants se repoussent, la répulsion magnétique a comme effet d'augmenter le décalage axial. Dans l'un et l'autre cas, l'effet de la paire d'aimants est d'entraîner le corps de butée dans la direction axiale de retrait.

Avantageusement, le dispositif comprend une pluralité de paires d'aimants, dont les premiers aimants de chaque paire sont identiques, dont les deuxièmes aimants de chaque paire sont identiques, dont les demi-plans sont équi-répartis autour de l'axe du dispositif et dont les distances de décalage axial de chaque paire sont identiques. La symétrie de répartition des paires d'aimants autour de l'axe permet que les efforts radiaux engendrés par chaque paire d'aimants se compensent l'un l'autre. Seule la composante axiale des efforts engendrés par les paires d'aimants s'ajoute pour engendrer l'effort de retrait sur le corps de butée.

Selon une première variante, le corps de butée présente une surface de siège qui s'étend radialement et est située en extrémité de plongée du corps de butée. Le dispositif comprend en outre une rondelle d'adaptation amovible, destinée à être fixée sur ladite surface de siège. Cela permet au dispositif de préhension d'être transformé pour s'adapter à différents objets à prendre, en particulier à des préformes présentant une hauteur entre le buvant et le dessous de la collerette différente.

Avantageusement, le dispositif comprend une pluralité d'aimants de fixation de la rondelle d'adaptation sur le corps de butée. Cela permet de réduire le temps de transformation du dispositif de préhension. Cela est particulièrement utile pour les installations de soufflage de récipients où la cadence peut atteindre 34 récipients par seconde alors que le temps nécessaire pour réchauffer une préforme au-dessus de sa température de transition vitreuse est de quelques dizaines de secondes. Ainsi, dans ce type d'installation, le nombre de dispositifs de préhension de préformes devant être convoyés à travers le four est de plusieurs centaines. On comprend que la réduction du temps de transformation de chacun des dispositifs de préhension réduit le coût de changement de série de récipient.

Avantageusement, les aimants de fixation du corps de butée sont disposés autour de l'axe du dispositif de manière intercalée avec les deuxièmes aimants de rappel. Ainsi, le champ magnétique créé dans le corps de butée par les aimants de fixation de la rondelle d'adaptation interfère peu avec les aimants de rappel.

Selon une deuxième variante, le dispositif comprend un moyen sélectif d'indexation axial entre le support de mandrin et le mandrin de préhension, définissant plusieurs positions extrêmes du mandrin de préhension pour une même position de plongée du support de mandrin.

La combinaison de cette deuxième variante avec la première variante précitée est particulièrement avantageuse. La distance entre les différentes positions extrêmes du mandrin de préhension peut correspondre à l'épaisseur de la rondelle d'adaptation. Ainsi, le mandrin de préhension pénètre à l'intérieur du col à une même distance du buvant, malgré le changement de série de préformes à saisir.

Avantageusement, le moyen d'indexation axial sélectif comprend une rainure présentant deux parois parallèles entre lesquelles coulisse un pion. Une partie au moins de la rainure est hélicoïdale. La rainure est ménagée dans le support de mandrin et le pion est fixé au mandrin ou inversement. Ainsi en faisant pivoter le mandrin de préhension autour de l'axe du dispositif alors que le support de mandrin reste fixe, on peut faire varier la position axiale du mandrin par rapport au support de mandrin.

Avantageusement, la rainure est fermée à ses deux extrémités. Le dispositif comprend en outre au moins une paire d'aimants d'indexation montés de manière répulsive, l'un sur le support de mandrin et l'autre sur le mandrin de préhension, de manière à ce que le pion soit plaqué soit sur l'une, soit sur l'autre des deux extrémités de la rainure. Les extrémités fermées de la rainure se comportent comme des butées angulaires. Les aimants répulsifs angulairement constituent avec les butées angulaires un ensemble bistable angulairement que la rainure hélicoïdale transforme en dispositif bistable axialement.

Selon une troisième variante, le corps de butée comprend un moyen d'indexation angulaire extérieur avec le corps de guidage et un moyen d'indexation angulaire intérieur avec le support de mandrin. Le corps de guidage est monté libre en rotation dans un corps principal du dispositif. Le corps principal du dispositif peut par exemple être entraîné en translation le long d'un chemin de convoyage traversant par exemple un four. Le support de mandrin peut être entraîné en rotation. Cela permet de faire pivoter l'objet saisi du type préforme autour de l'axe du dispositif de préhension pendant que celui-ci traverse le four.

Avantageusement, le ou les aimants d'indexation montés sur le support de mandrin sont disposés chacun en regard d'un des premiers aimants de rappel lorsque le support de mandrin est dans la position de plongée, et ont la même orientation magnétique que ledit premier aimant de rappel. Ainsi, les aimants d'indexation contribuent à renforcer la force de rappel générée par les aimants de rappel.

Selon un deuxième mode de réalisation particulier, le dispositif comprend un moyen sélectif d'indexation angulaire entre le corps de butée et le support de mandrin, présentant une pluralité de positions angulaires dans chacune desquelles la translation axiale est limitée par un système de butées de support permettant d'entraîner axialement le corps de butée sur une partie de la course de plongée du support de mandrin, différente pour chacune des positions angulaires. Ce deuxième mode de réalisation permet de faire varier l'extrémité du corps de butée servant de siège pour une même course de plongée du support de mandrin. Cela permet au dispositif de préhension de s'adapter à des hauteurs de col différentes sans avoir besoin d'ajouter une pièce supplémentaire. C'est une solution alternative à l'ajout d'une rondelle d'adaptation qui permet de réduire le nombre de références d'outillage à stocker.

Avantageusement, le dispositif comprend un moyen sélectif d'indexation angulaire entre le corps de guidage et le corps de butée, présentant une pluralité de positions angulaires dans chacune desquelles la translation axiale du corps de butée par rapport au corps de guidage est limitée par un système de butées axiales de guidage définissant une position de retrait du corps de butée, différente pour chacune desdites positions angulaires. Cela permet, pour une même position de retrait du support de mandrin, de disposer de plusieurs hauteurs de retrait du corps de butée qui servent de dévêtisseur. Ainsi, la position de retrait du corps de butée servant de dévêtissage peut être réglée à une même distance au-dessus du buvant, pour différentes hauteurs de cols.

Selon un autre aspect, l'invention porte également sur un système de convoyage d'objets, comprenant un convoyeur entraînant une pluralité de dispositifs de préhension précités. Le système présente une zone de chargement et un moyen d'amenée des objets à charger sur un siège de chargement. L'axe d'un dispositif de préhension est perpendiculaire à la trajectoire d'entraînement des dispositifs lorsque ledit dispositif de préhension traverse la zone de chargement. Ledit dispositif de préhension coopère avec un système de came fixe pour entraîner axialement le support de mandrin.

### Brève description des figures :

La présente invention sera mieux comprise à l'étude de la description détaillée de quelques modes de réalisation pris à titre d'exemples nullement limitatifs et illustrés par les dessins annexés sur lesquels :
- La figure 1 est une coupe longitudinale d'un premier mode de réalisation d'un dispositif de préhension en position de retrait équipé pour un col court,
- La figure 2 est une demi-vue selon le plan II-II de la figure 1,
- la figure 3 est une coupe longitudinale du premier mode de réalisation en position de plongée pour un col court,
- la figure 4 est une coupe transversale selon le plan IV-IV de la figure 1,
- la figure 5 est une vue partielle du support de mandrin et du mandrin selon la flèche F5 de la figure 4,
- la figure 6 est une vue partielle du support de mandrin et du mandrin selon la flèche F6 de la figure 4,
- la figure 7 est une coupe transversale selon le plan VII-VII de la figure 3,
- la figure 8 est une coupe longitudinale du premier mode de réalisation en position de retrait pour un col long,
- la figure 9 est une coupe longitudinale du premier mode de réalisation en position de plongée pour un col long,
- la figure 10 est une coupe longitudinale d'un deuxième mode de réalisation en position de retrait pour un col court,
- la figure 11 est une coupe longitudinale du deuxième mode de réalisation en position de plongée pour un col court,
- la figure 12 est une coupe longitudinale du deuxième mode de réalisation en position de retrait pour un col long,
- la figure 13 est une coupe longitudinale d'un deuxième mode de réalisation en position de plongée pour un col long.

### Description détaillée de l'invention :

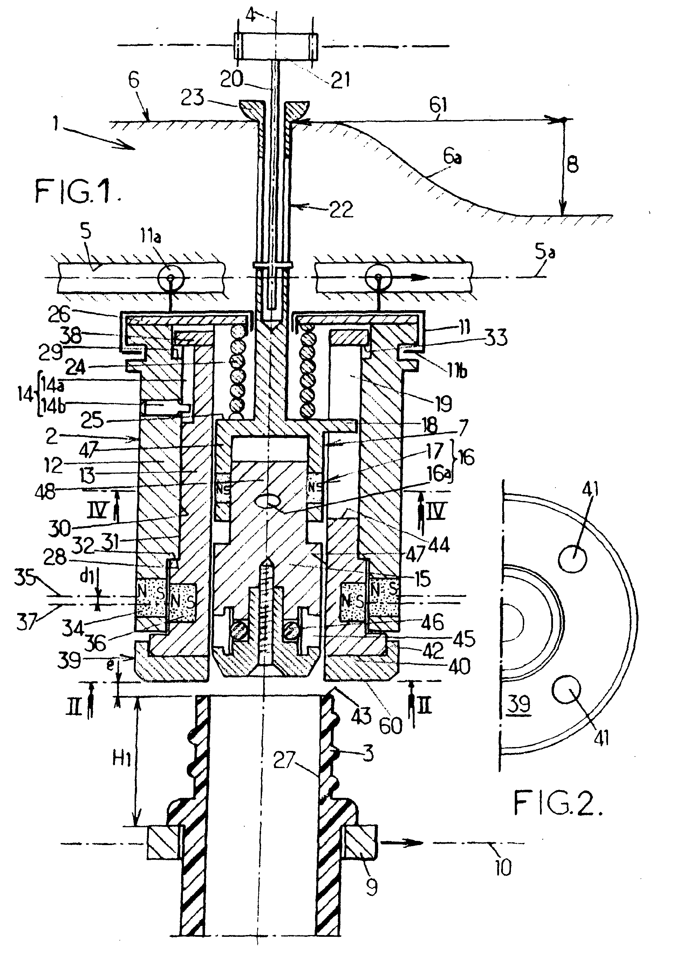

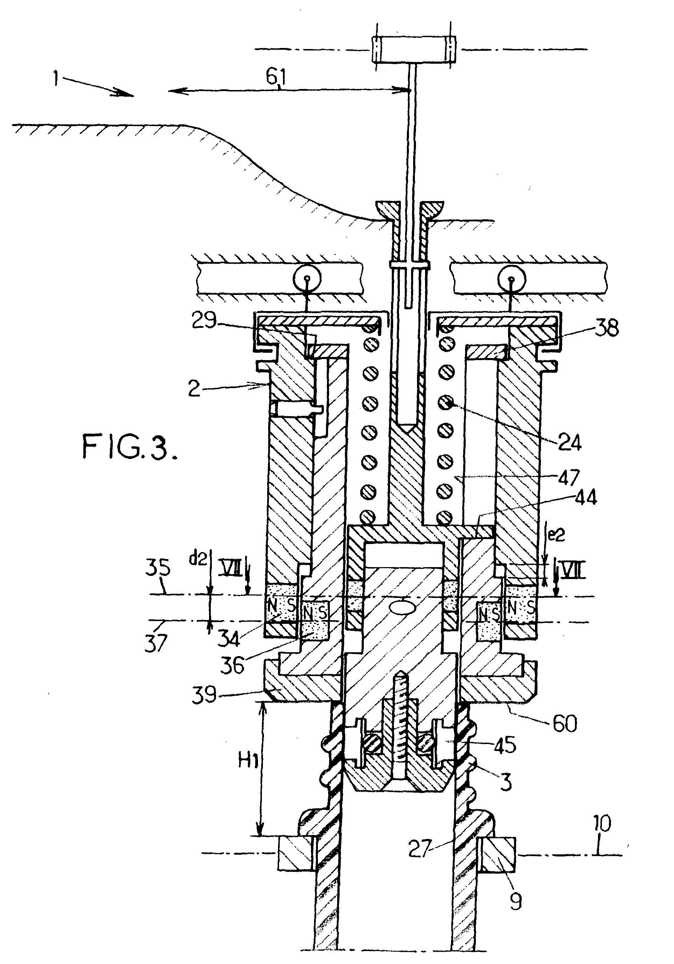

Un système 1 de convoyage illustré en figure 1 comprend un dispositif 2 de préhension d'une préforme 3. Le système 1 de convoyage comprend également un rail 5 de convoyage s'étendant le long d'une trajectoire 5a de convoyage. Une zone 61 de chargement du système 1 de convoyage s'étend depuis une position de début de chargement illustrée en figure 1' jusqu'à une position de fin de chargement illustrée en figure 3. La trajectoire 5a de convoyage est horizontale dans la zone 61 de chargement. Le dispositif 2 de préhension présente un axe 4 du dispositif de préhension qui est perpendiculaire à la trajectoire 5a de convoyage.

Le système 1 de convoyage comprend également un système 6 de cames fixes qui présente une marche 6a permettant la montée ou la descente d'un support 7 de mandrin. La position haute du système 6 de came fixe illustrée en figure 1, et la position basse illustrée en figure 3, définissent une course 8 de plongée. La direction de plongée s'étendant du haut vers le bas.

Le système 1 de convoyage comprend également un siège 9 de chargement de la préforme 3, entraîné par des moyens d'amenée non représentés le long d'une trajectoire 10 d'amenée de la préforme 3. La trajectoire 10 s'étend parallèlement aux rails 5 de convoyage, dans la zone 61 de chargement. La vitesse de translation horizontale du siège 9 de chargement est identique à la vitesse de convoyage du dispositif 2 de préhension le long des rails 5 de convoyage. Cela permet que l'axe 4 du dispositif 2 de préhension reste aligné avec l'axe de la préforme 3 durant toute la zone 61 de chargement.

Le dispositif 2 de préhension comprend un corps 11 principal muni de galets 11a ajustés aux rails 5 de convoyage pour guider le corps 11 principal en translation.

Le dispositif 2 de préhension comprend également un corps 12 de guidage et un corps 13 de butée, tous les deux de forme sensiblement tubulaire, coaxiaux à l'axe 4 du dispositif 2. Le corps 12 de guidage est monté en rotation dans le corps 11 principal et fixe en translation axiale grâce à une butée rotative 11b. Autrement dit, la position axiale du corps 11 principal est, à un moment, déterminée vers le haut et vers le bas par le rail 5 de convoyage.

Le corps 13 de butée est monté en translation axiale à l'intérieur du corps 12 de guidage et solidarisé en rotation avec le corps 12 de guidage par un moyen 14 d'indexation angulaire extérieure. Le moyen 14 d'indexation extérieure peut comprendre, tel qu'illustré en figure 1, une rainure 14a s'étendant longitudinalement dans le corps 13 de butée et un pion 14b adapté à la rainure 14a et fixé dans le corps 12 de guidage.

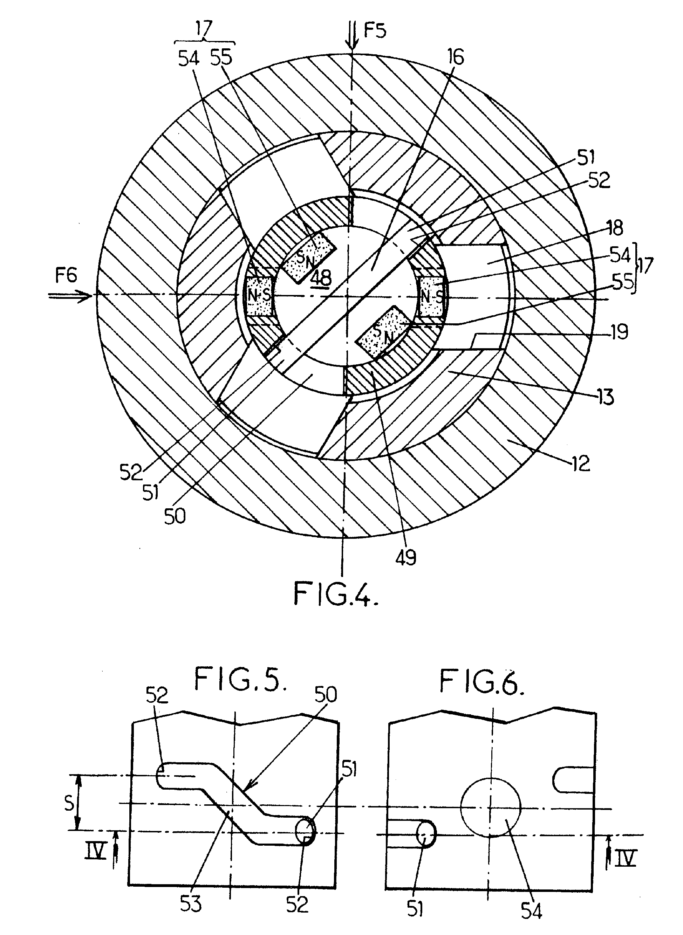

Le support 7 de mandrin est solidarisé en translation et en rotation avec un mandrin 15 de préhension par un moyen 16 sélectif d'indexation comprenant une goupille 16a et une paire 17 d'aimants d'indexation dont le fonctionnement sera détaillé aux figures 4 à 6.

Le support 7 de mandrin comprend trois doigts 18 d'indexation angulaire glissant verticalement le long de trois rainures 19 longitudinales du corps 13 de butée. Les rainures 19 longitudinales constituent un moyen 19 d'indexation angulaire intérieur du corps 13 de butée avec le support 7 de mandrin.

Une tige 20 d'entraînement en rotation est fixée à une roue 21 à encoche coopérant avec une chaîne non représentée. Le support 7 de mandrin comprend un moyen 22 télescopique axialement qui assure une indexation angulaire entre le support 7 de mandrin et la tige 20 d'entraînement en rotation. Le moyen 22 télescopique d'indexation angulaire peut comprendre une goupille radiale glissant dans des rainures longitudinales.

On comprend que le moyen 14 d'indexation extérieure, le moyen 19 d'indexation intérieur, le moyen 16 sélectif d'indexation, et le moyen 22 font que l'ensemble constitué par le corps 12 de guidage, le corps 13 de butée, le support 7 de mandrin, le mandrin 15 de préhension, et la roue 21 à encoche, forment un ensemble solidaire en rotation. La roue 21 à encoche et le corps 12 de guidage se déplacent parallèlement de l'un à l'autre tout le long du rail 5 de convoyage.

On va maintenant décrire un système de butée axiale et un moyen de rappel permettant de déterminer la position axiale du support 7 de mandrin, du mandrin 15 de préhension et du corps 13 de butée.

Le système 6 de came, fixe par rapport au système 1 de convoyage, comprend une surface au-dessus de laquelle vient en appui un galet 23 du support 7 de mandrin. Un ressort 24 d'appui, du type ressort hélicoïdal, est disposé axialement entre un épaulement 25 du support 7 de mandrin, tourné vers le haut du dispositif et un couvercle 26 fixé au corps 13 de butée. Le ressort 24 d'appui est monté en compression et engendre un effort vertical vers le bas sur le galet 23 en prenant appui sur le rail 5 de convoyage.

Le corps 12 de guidage présente un lamage inférieur 28 dont la surface radiale est tournée vers le bas du corps 12 de guidage et un lamage supérieur 29 dont la surface radiale est tournée vers le haut du corps 12 de guidage. Le corps 12 de guidage présente également un alésage 30 de guidage s'étendant axialement entre les deux lamages inférieur 28 et supérieur 29. Le corps 13 de butée présente un diamètre 31 extérieur ajusté à l'alésage 30 de guidage garantissant une bonne coaxialité entre les corps 12 de guidage et les corps 13 de butée. Le corps 13 de butée comprend un épaulement 32 coopérant avec le lamage inférieur 28. Une rondelle 38 s'étend radialement au-delà du diamètre 31 et fournit ainsi un épaulement 33 coopérant avec le lamage supérieur 29.

Le corps 12 de guidage comprend également quatre premiers aimants 34 permanents présentant un axe magnétique radial réparti à 90 degrés dans un premier plan 35 horizontal. Le corps 13 de butée comprend quatre deuxièmes aimants 36 permanents présentant un axe magnétique radial et parallèle à l'axe magnétique d'un des quatre premiers aimants 34 et formant ainsi quatre paires 34-36 d'aimants de rappel. Les axes magnétiques des premier et deuxième aimants de chaque paire sont situés dans un même demi-plan radial. Les axes magnétiques des quatre deuxièmes aimants 36 sont tous situés dans un deuxième plan 37 horizontal décalé vers le bas, d'une distance axiale « d1 ».

Le mandrin 15 de préhension est fixé à l'intérieur du support 7 du mandrin de manière que l'extrémité inférieure du mandrin 15 de préhension soit légèrement en retrait par rapport à l'extrémité inférieure de la rondelle 39 d'adaptation. Ainsi, lorsque le support 7 de mandrin est dans une position de retrait, comme illustré en figure 1, l'extrémité inférieure de la rondelle 39 d'adaptation est horizontale et située à une distance « e1 » au-dessus du buvant 43 de la préforme 3.

Le mandrin 15 de préhension comporte une bague 45 reçue dans une gorge annulaire et plaquée radialement vers l'extérieur par un joint torique 46. Le corps 13 de butée présente un diamètre intérieur 47 supérieur à l'encombrement extrême radial de la bague 45 trois secteurs de sorte qu'il n'y a pas de frottement entre le mandrin de préhension et le corps 13 de butée lorsque le support 7 de mandrin est en position de retrait.

Comme illustré aux figures 1 et 2, le dispositif 2 de préhension comprend également une rondelle 39 d'adaptation plaquée sur une surface 40 de siège du corps 13 de butée s'étendant radialement, et située en extrémité de plongée du corps 13 de butée. La fixation de la rondelle 39 d'adaptation au corps 13 de butée est assurée par quatre paires d'aimants 41 de fixation, l'un des aimants 41 de chaque paire étant fixé (encastré ou collé) dans le corps 13 de butée et affleurant la surface 40 de siège, et l'autre aimant 41 de fixation de chacune des quatre paires étant fixé en regard dans la rondelle 39 d'adaptation. Chacun des aimants 41 de fixation est un aimant permanent présentant un axe magnétique vertical, les aimants de chaque paire étant disposés de manière à s'attirer mutuellement.

Avantageusement, les quatre paires d'aimants 41 de fixation sont disposées angulairement de manière intercalée avec les quatre paires 34-36 d'aimants permanents de rappel, ainsi qu'illustré en figure 2.

On comprend que la rondelle 39 d'adaptation est particulièrement rapide à installer en extrémité de chacun des dispositifs de préhension du système 1 de convoyage. Le retrait de la rondelle 39 d'adaptation se fait également de manière simple grâce à un rebord 42 de la rondelle 39 d'adaptation s'étendant axialement autour du corps 13 de butée. L'opérateur prend appui sur le rebord 42 et fait pivoter la rondelle 39 d'adaptation autour de l'axe 4 du dispositif jusqu'à ce que les deux aimants 41 de chaque paire d'aimants de fixation soient éloignés l'un de l'autre.

Comme illustré en figure 3, lorsque le dispositif 2 de préhension arrive en fin de zone de chargement, le galet 23 solidaire du support 7 de mandrin est descendu en bas de la marche 6a formée par le système de cames fixes. Le ressort 24 d'appui prend appui axialement sur le rail 5 de convoyage via les galets 11a de roulement, le corps 11 principal, la butée 11b rotative, le corps 12 de guidage et le couvercle 26 du corps 12 de guidage.

La course 8 de plongée du support 7 de mandrin comprend une première partie au cours de laquelle le doigt 18 d'indexation glisse le long de la rainure 19 longitudinale jusqu'à un fond 44 des rainures 19 longitudinales. La course 8 de plongée se prolonge ensuite dans la direction de plongée par une partie terminale de la course 8 de plongée au cours de laquelle les doigts 18 d'indexation du support 7 de mandrin entraînent le corps 13 de butée, jusqu'à ce que la rondelle 38 d'appui du corps 13 de butée vienne au contact du lamage supérieur 29 du corps 12 de guidage.

La distance axiale entre les épaulements 32 et 33 est supérieure à la distance axiale entre les lamages 28 et 29 d'une valeur égale à une distance « e2 ». « e2 » correspond au jeu axial entre le corps 13 de butée et le corps 12 de guidage. « e2 » correspond également à la partie terminale de la course 8 de plongée. Au cours de la partie e2 terminale de la course 8 de plongée, le deuxième plan horizontal 37 des deuxièmes aimants de rappel s'éloignent à une distance « d2 » du premier plan 35 horizontal des axes magnétiques des premiers aimants 34 de rappel fixés dans le corps 12 de rappel. Les tailles des aimants 34,36 sont choisies pour que l'effort de rappel soit maximum entre d1 et d2.

La partie e2 terminale de la course 8 de plongée se fait sans frottement significatif car les premier et deuxième aimants 34, 36 sont orientés magnétiquement de manière attractive ; ils sont maintenus à distance radiale l'un de l'autre par l'ajustement du diamètre 31 dans l'alésage 30. Cet ajustement peut être lubrifié sans risquer d'engendrer de pollution des récipients.

La préforme 3 présente un diamètre intérieur 27 inférieur à l'encombrement radial extrême de la bague 45 trois secteurs, de sorte que l'introduction du mandrin 15 de préhension à l'intérieur du diamètre 27 de la préforme 3 engendre la compression du joint 46 torique.

Lorsque le support 7 de mandrin a atteint la position de plongée, la surface 60 inférieure de la rondelle 39 d'adaptation vient en contact avec le buvant 43 de la préforme 3. Ainsi, le système 1 de convoyage peut poursuivre sa course de convoyage alors que le siège 9 de chargement se retire de dessous la collerette de la préforme 3. La préforme 3 est maintenue fermement alignée dans l'axe 4 du dispositif 2 de préhension en raison du frottement de la bague trois secteurs 45 contre la préforme, et par le fait que le corps 13 de la butée et la rondelle 39 d'adaptation sont maintenus bien plaqués dans le sens du retrait contre le doigt 18 de support 7 de mandrin grâce aux quatre paires « 34-36 » d'aimants de rappel. Ainsi, malgré les vibrations engendrées par les cadences élevées, la surface 60 inférieure de la rondelle 29 d'adaptation se comporte comme un siège fixe par rapport au mandrin 15 de préhension. La distance « e1 » de retrait du dispositif 2 de préhension au-dessus du buvant 43 de la préforme 3 est égal au jeu axial « e2 » entre le corps 13 de butée et le corps 12 de guidage.

On va maintenant décrire, à l'aide des figures 4 à 6, le moyen 16 sélectif d'indexation axial(e) entre le support 7 de mandrin et le mandrin 15 de préhension.

Le mandrin 15 de préhension comprend un arbre 48 reçu dans une jupe 49 du support 7 de mandrin. La goupille 16a est emmanchée transversalement dans l'arbre 48 et débouche latéralement dans deux rainures 50 diamétralement opposées ménagées dans la jupe 49 du support 7 de mandrin. Les extrémités de la goupille 16a constituent deux pions 51 coulissant de manière ajustée entre les deux parois parallèles de chacune des rainures 50. Chacune des rainures 50 comprend deux extrémités 52 fermées distantes axialement d'une distance S et reliées par une partie 53 hélicoïdale. Ainsi, lorsque le mandrin 15 de préhension pivote autour de l'axe 4 du dispositif à l'intérieur du support 7 de mandrin, la position axiale du mandrin 15 de préhension est décalée de la distance S par rapport au support 7 de mandrin.

Deux premiers aimants 54 permanents d'indexation sont montés fixes dans la jupe 49 du support 7 de mandrin, et deux deuxièmes aimants 55 sont montés dans l'arbre 48 du mandrin 15 en regard des premiers aimants 54 lorsque le pion 51 est au milieu des deux extrémités 52 et au milieu de S, dans la partie hélicoïdale 53 .des rainures 50. Les premier et deuxième aimants d'indexation présentent des axes magnétiques radiaux et inversés magnétiquement l'un par rapport à l'autre de manière répulsive. Ainsi, les deuxièmes aimants ont tendance à s'éloigner des premiers aimants jusqu'à ce que les pions 51 arrivent en contact avec l'une ou l'autre des extrémités 52 des rainures 50. Autrement dit, les paires d'aimants d'indexation 54-55 se comportent comme un mécanisme bistable angulairement. La rampe hélicoïdale 53 transforme ce mécanisme bistable angulairement en mécanisme bistable axialement. Un tel mécanisme permet de changer très rapidement de série de préformes 3 à saisir. Il suffit que l'opérateur fasse pivoter angulairement chacun des mandrins 15 de préhension de chacun des dispositifs 2 de préhension du système 1 de convoyage pour que le mandrin 15 de préhension prenne une position extrême de mandrin différente pour la même position de plongée du support 7 de mandrin.

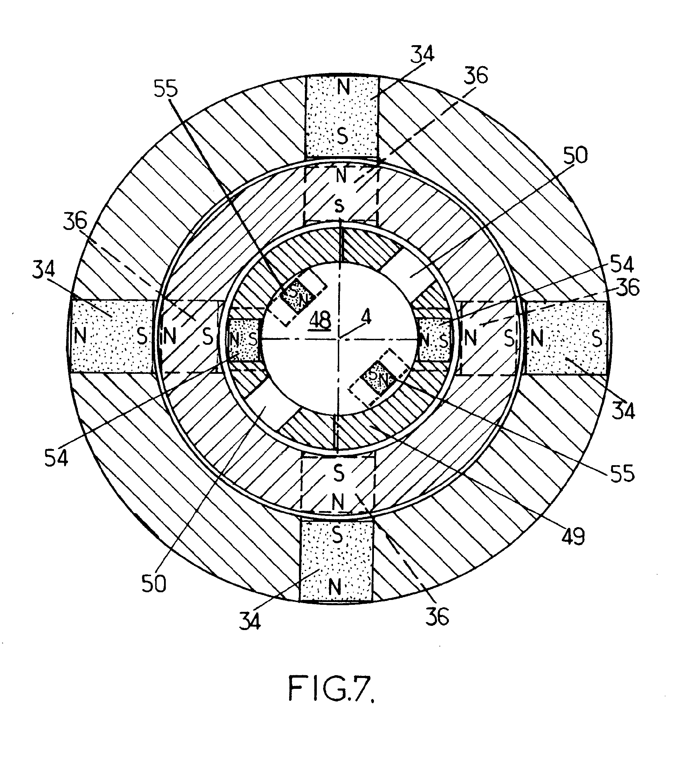

Comme illustré en figure 7, les premiers aimants 54 d'indexation du support 7 de mandrin sont situés axialement sensiblement en regard des premiers aimants 34 de rappel du corps 12 de guidage. De plus, les six aimants permanents que constituent les deux premiers aimants 54 d'indexation et les paires 34-36 d'aimants de rappel qui sont situées en regard des deux premiers aimants 54 sont tous orientés dans la même direction magnétique. Ainsi, les effets magnétiques des six aimants précités se renforcent mutuellement. Autrement dit, les trois aimants que constituent l'un des premiers aimants 54 d'indexation, et les deux aimants de la paire d'aimants de rappel 34-36 située en regard dudit premier aimant 54 d'indexation, sont orientés nord sud dans le sens centripète à gauche de la figure 7, alors que les trois autres aimants diamétralement opposés sont orientés nord sud dans le sens centrifuge. Cette disposition renforce à la fois l'effort de rappel lorsque le support 7 de mandrin est en position de plongée et le maintien du mandrin 15 de préhension dans l'indexation axiale sélectionnée.

Par ailleurs, les deux autres paires d'aimants de rappel ne correspondant pas à des premiers aimants d'indexation sont toutes les deux orientées nord sud selon une direction centripète. Ainsi, les champs magnétiques créés par les deux paires illustrées en haut et en bas de la figure 7 ont une incidence sur les deuxièmes aimants 55 d'indexation se compensant l'une l'autre.

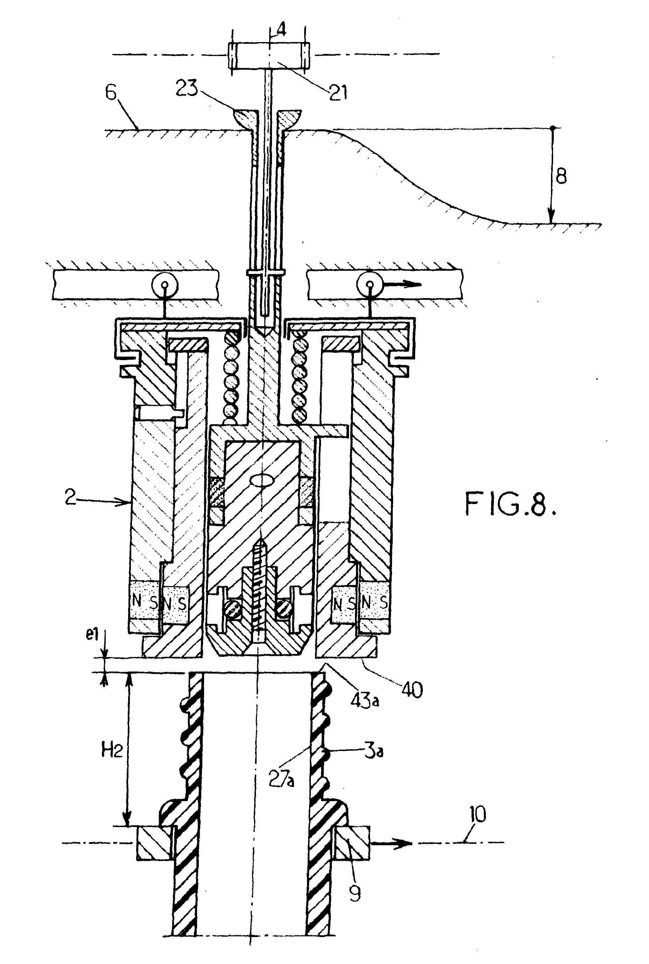

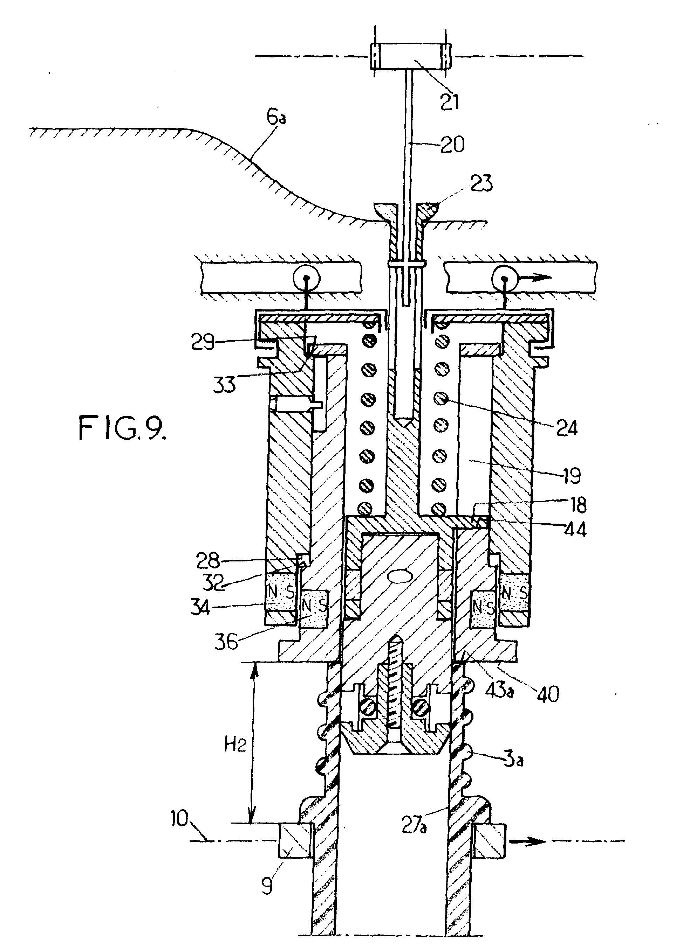

On va maintenant, à l'aide des figures 8 et 9, illustrer l'intérêt de la rondelle 39 d'adaptation et du moyen 16 sélectif d'indexation axiale. Le même système 1 de convoyage que celui décrit aux figures précédentes permet un changement rapide de série pour s'adapter à des préformes 3a présentant une hauteur de référence H2 entre le buvant 43 et le siège 9 de chargement différent de la préforme 3. L'épaisseur axiale de la rondelle 39 d'indexation correspond à la différence de hauteur « H2-H1 ». De plus, la distance S engendrée par le changement d'indexation axiale du mandrin 15 de préhension est également égale à la différence « H2-H1 ». La surface 40 de siège est alors située à une distance « e1 » au-dessus du buvant 43 de la préforme 3. Ainsi, quelle que soit la préforme 3 ou 3a, le dispositif 2 de préhension plaque juste sur le buvant 43 ou 43a, en position de plongée, et remonte d'une même distance e1=e2 au-dessus dudit buvant en position de retrait.

La surface 40 de siège à l'extrémité du corps 13 de butée se comporte comme un siège fixe par rapport au mandrin 15 de préhension, même lorsque le siège 9 de chargement a été retiré.

Lorsque le support 7 de mandrin descend en position de plongée, la bague 45 à trois secteurs pénètre à une même profondeur à l'intérieur du diamètre 27a intérieur à la préforme 3a que dans la configuration à col court, illustrée aux figures 1 à 7.

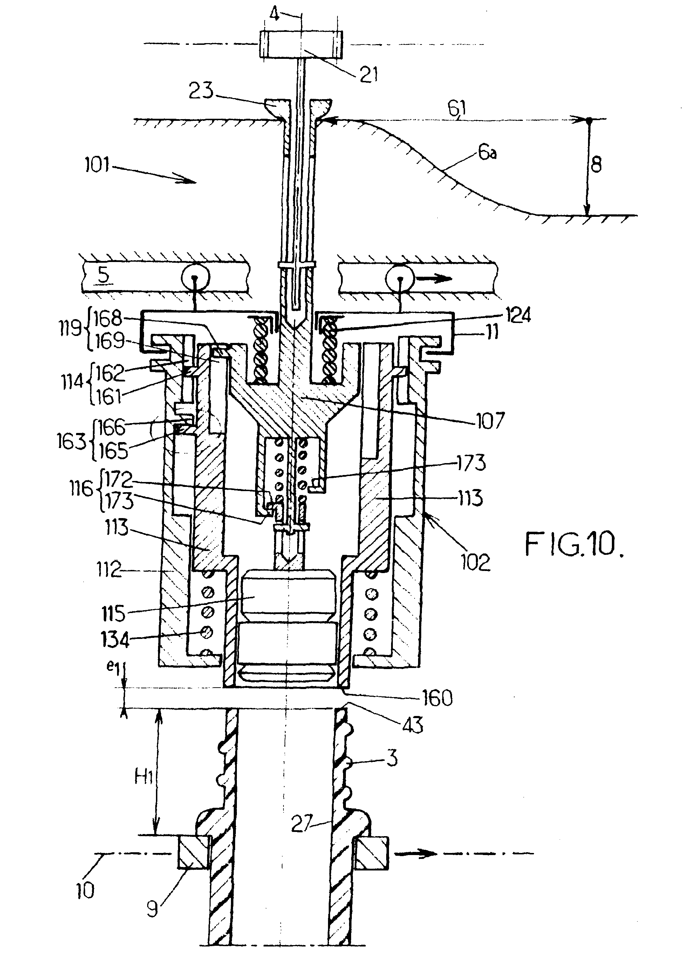

On va maintenant, à l'aide des figures 10 à 13, illustrer un deuxième mode de réalisation de l'invention présentant l'avantage que le changement de série des préformes 3 ayant une hauteur de col H1 à des préformes 3a ayant une hauteur de col H2 n'engendre aucun stockage supplémentaire de pièces d'adaptation.

Le système 101 de convoyage diffère du système 1 de convoyage précédemment décrit par un moyen 116 sélectif d'indexation axiale entre un support 107 de mandrin et un mandrin 115 de préhension. Il en diffère également par le fait qu'un moyen 114 d'indexation angulaire extérieur entre un corps 113 de butée et un corps 112 de guidage est de type sélectif, présentant deux positions angulaires relatives sélectionnables, et par le fait qu'un moyen 119 d'indexation angulaire entre le corps 113 de butée et le support 107 de mandrin est de type sélectif, présentant également deux positions angulaires relatives sélectionnables. De plus, chacun des dispositifs 102 de préhension présente un moyen de rappel 134 monté entre le corps 112 de guidage et le corps 113 de butée sous la forme d'un ressort 134 hélicoïdal élastique.

Comme illustré en figure 10, le moyen 114 d'indexation angulaire extérieur sélectif est constitué par deux ergots 161 glissant dans deux rainures longitudinales 162, diamétralement opposées. En tirant vers le bas sur le corps 113 de butée, l'opérateur fait sortir les ergots 161 des rainures 162, fait pivoter le corps 113 de butée de 180 degrés par rapport au corps 112 de guidage, et réinsère les ergots 161 dans les rainures 162 correspondantes.

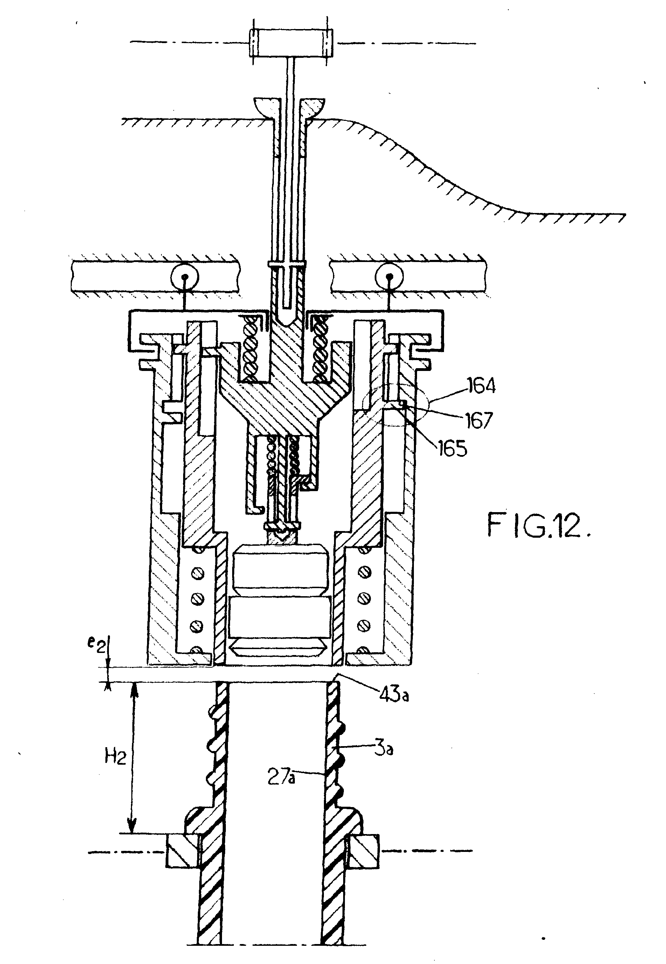

Dans l'une des positions angulaires relatives illustrées en figure 10, les corps de guidage et de butée 112, 113 présentent un premier système 163 de butées axiales de retrait. Dans la deuxième position angulaire sélectionnée illustrée en figure 12, les corps de butée et de guidage 112, 113 présentent un deuxième système 164 de butées axiales de retrait. Les premier et deuxième systèmes 163 de butée axiale de retrait sont constitués par un ergot 165 faisant saillie à l'extérieur du corps 113 de butée qui entre en contact, soit contre une première butée 166 de retrait dans l'indexation axiale illustrée en figure 10, soit contre une deuxième butée 167 du corps 112 de guidage lorsque le corps 113 de butée est dans l'indexation angulaire illustrée en figure 12.

De manière similaire, le moyen 119 angulaire sélectif comprend un ergot 168 du support 107 de mandrin glissant dans deux rainures 169 ménagées à l'intérieur du corps 113 de butée. L'opérateur tire vers le bas le corps 113 de butée pour le faire pivoter de 180 degrés alors que le corps 112 de guidage et le support 107 de mandrin restent immobiles. Ainsi, les changements d'indexation angulaire des moyens 114 et 119 sont simultanés.

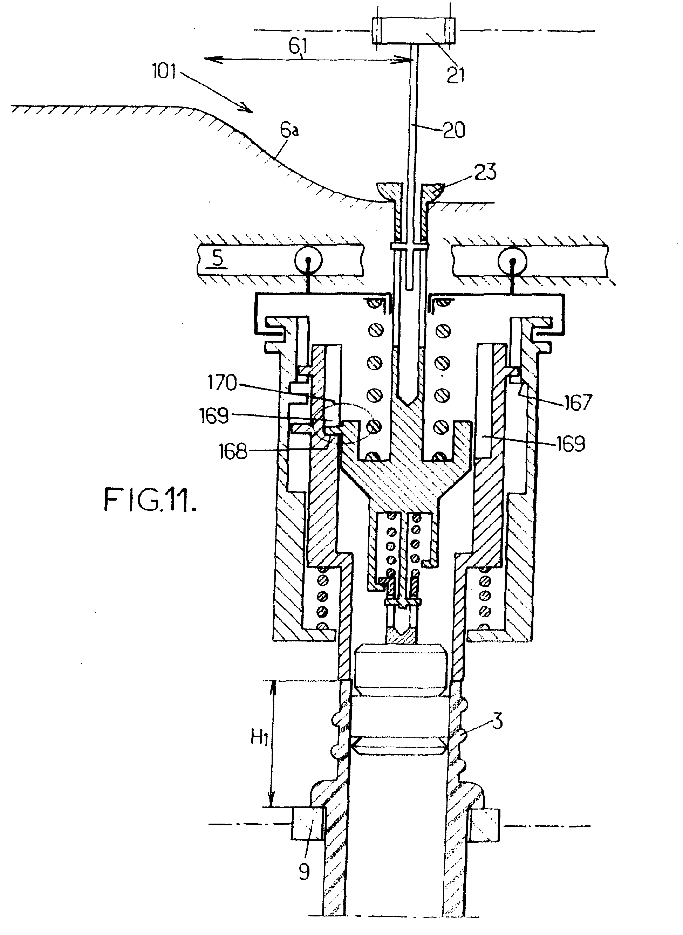

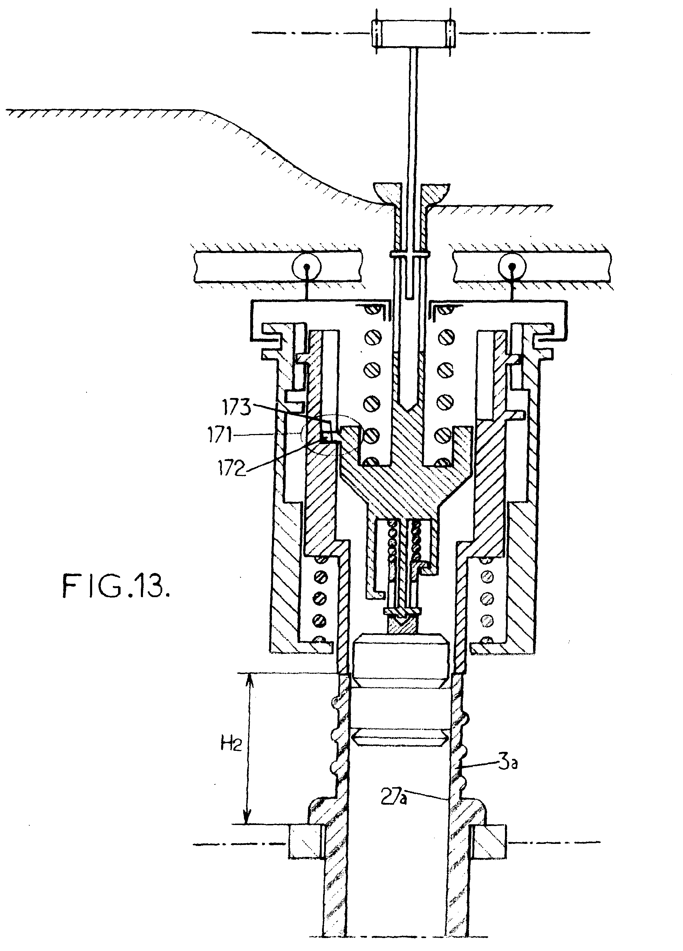

Le dispositif 102 de préhension présente un premier système 170 de butées axiales de support, illustré en figure 11, actif lorsque le corps 113 de butée est dans la position angulaire illustrée aux figures 10 et 11, et un deuxième système 171 de butées axiales de support, illustré en figure 13, lorsque le corps 113 de butée est dans la deuxième indexation angulaire illustrée aux figures 12 et 13. Les premier et deuxième systèmes 170, 171 de butées axiales de support sont constitués par le fait que l'ergot 168 du support 107 de mandrin entraîne avec lui le corps 113 de butée dès qu'il entre en contact avec le fond de l'une ou l'autre des rainures 169.

Le moyen 116 sélectif d'indexation axiale entre le mandrin 115 et le support 107 de mandrin est également dû à un ergot plaqué sur une butée axiale 173 différente selon que le mandrin 115 est pivoté de 180 degrés par rapport au support 107 de mandrin (figures 10 et 11).

La distance axiale entre la première butée 166 et la deuxième butée 167 du corps 112 de guidage est égale à la différence « H2-H1 » des hauteurs de col des préformes 3 et 3a (figures 10 et 12). Ainsi, la position extrême de retrait du corps 13 de butée présente une surface extrême inférieure 160 à même distance au-dessus du buvant 43 ou 43a des préformes 3, 3a.

La distance axiale entre les fonds des deux rainures 169 intérieures au corps 112 de butées est également égale à la différence « H2-H1 » de manière que la surface inférieure 160 du corps 113 de butée soit juste en contact avec les buvants, respectivement 43 et 43a des préformes 3, 3a (figures 11 et 13).

Avantageusement, la différence de distance axiale entre les butées 173 du support 107 de mandrin est également égale à la différence « H2-H1 », de manière que le mandrin 115 de préhension pénètre à une même distance respectivement du buvant 43 ou 43a (figures 11 et 13).

Dans une variante, les systèmes 1 ou 101 de convoyage peuvent être équipés de systèmes de cames fixes à deux surfaces parallèles assurant la plongée et le retrait des supports 7, 107 de mandrins sans avoir besoin de ressorts 24, 124 d'appui. Les moyens d'indexation angulaire, laissant libre la translation axiale relative, peuvent être du type cannelures ou être constitués par des surfaces de guidage en translation conjuguées présentant une ou plusieurs périodicités angulaires autour de l'axe 4 du dispositif. Par exemple, les alésages 30 et le diamètre 31 de guidage peuvent présenter une section droite, carrée ou rectangulaire, ou triangulaire, ou elliptique.

Dans une autre variante, le dispositif 102 de préhension peut présenter uniquement le moyen 119 d'indexation angulaire sélectif permettant que la surface inférieure 160 du corps 113 de butée serve de siège pour les deux types de préformes 3, 3a. Dans ce cas, la hauteur permettant le dévêtissage e1, e2 est différente pour les deux types de préformes 3, 3a, et la pénétration du mandrin 115 dans le goulot est également différente.

Dans une autre variante, le dispositif 102 de préhension peut présenter un deuxième système d'indexation angulaire sélectif, soit entre le mandrin 115 et le support 107 de mandrin, soit entre les corps de butée et de guidage 112, 113.

De même, le dispositif 2 de préhension peut ne pas présenter de moyens 16 sélectifs d'indexation axiale du mandrin 15 de préhension.

Dans une autre variante, le dispositif 2 de préhension peut être muni d'un moyen de rappel entre les corps de guidage et de butée 12, 13 utilisant un ressort hélicoïdal élastique.

Dans une autre variante, le dispositif 2 de préhension présente un moyen sélectif d'indexation axiale à base d'aimants répulsifs, non pas entre le mandrin 15 et le support 7 de mandrin, mais entre le support 7 de mandrin et le corps 13 de butée. Cela permet de s'affranchir de la rondelle 39 d'adaptation.

## Revendications

1. Dispositif (2,102) de préhension d'un objet tel qu'une préforme (3,3a) de soufflage de récipient, comprenant :
- un corps (12,112) de guidage;
- un corps (13,113) de butée, monté à translation axiale par rapport au corps de guidage le long d'un axe (4) du dispositif;
- un support (7,107) de mandrin, équipé d'un mandrin (15,115) de préhension, mobile axialement par rapport au corps de guidage et présentant une course (8) de plongée allant d'une position de retrait à une position de plongée dans laquelle le mandrin est apte à prendre l'objet (3);
le corps (13,113) de butée présentant avec le support (15,115) de mandrin un système (18-19;170;171) de butées de support agencées de manière que le support de mandrin entraîne axialement le corps de butée sur une partie (e2) terminale de la course (8) de plongée,
**caractérisé en ce qu'**il comprend un moyen (34-36,134) de rappel monté entre le corps de guidage et le corps de butée visant à entraîner le corps de butée dans une direction axiale de retrait opposée à la direction de la course de plongée.

2. Dispositif selon la revendication 1, dans lequel le corps (13,113) de butée et le corps (12,112) de guidage comprennent un système (28-32;163;169) de butées de guidage limitant la translation axiale du corps de butée dans la direction de retrait.

3. Dispositif selon la revendication 1 ou 2, dans lequel le corps (13) de butée et le corps (12) de guidage sont en matériau amagnétique, et dans lequel le moyen de rappel comprend au moins un aimant (34) permanent monté sur l'un des corps parmi les corps de guidage ou de butée, et un élément (36) en matériau magnétique monté sur l'autre corps parmi les corps de guidage ou de butée.

4. Dispositif selon la revendication 3, dans lequel le moyen de rappel comprend au moins une paire (34,36) d'aimants de rappel composée d'un premier aimant (34) permanent monté sur le corps (12) de guidage et d'un deuxième aimant (36) permanent monté sur le corps (13) de butée ; les axes magnétiques des premier et deuxième aimants étant perpendiculaires à l'axe (4) du dispositif et situés dans un même demi-plan radial ; l'axe magnétique du premier aimant étant décalé le long de l'axe (4) du dispositif par rapport à l'axe magnétique du deuxième aimant, dans la direction de plongée si les deux aimants (34,36) s'attirent et dans la direction de retrait si les deux aimants se repoussent.

5. Dispositif selon la revendication 4, comprenant une pluralité de paires (34-36) d'aimants, dont les premiers aimants (34) de chaque paire sont identiques, dont les deuxièmes aimants (36) de chaque paire sont identiques, dont les demi-plans sont équi-répartis autour de l'axe (4) du dispositif, et dont les distances (d1,d2) de décalage axial de chaque paire sont identiques.

6. Dispositif selon l'une des revendications précédentes, dans lequel le corps (13) de butée présente une surface (40) de siège qui s'étend radialement et est située en extrémité de plongée du corps (13) de butée ; le dispositif comprenant en outre une rondelle (39) d'adaptation amovible destinée à être fixée sur ladite surface (40) de siège.

7. Dispositif selon les revendications 5 et 6 prises dans leur ensemble, comprenant une pluralité d'aimants (41) de fixation de la rondelle (39) d'adaptation sur le corps (13) de butée ; les aimants (41) de fixation du corps de butée étant disposés autour de l'axe (4) du dispositif de manière intercalée avec les deuxièmes aimants (76) de rappel.

8. Dispositif selon l'une des revendications précédentes, comprenant un moyen (16,116) sélectif d'indexation axial entre le support (7,107) de mandrin (15,115) et le mandrin de préhension, définissant plusieurs positions extrêmes du mandrin (15,115) de préhension pour une même position de plongée du support (7,107) de mandrin.

9. Dispositif selon la revendication 8, dans lequel le moyen (16) d'indexation axial sélectif comprend une rainure (50) présentant deux parois parallèles entre lesquelles coulisse un pion (51) ; une partie au moins de la rainure (50) étant hélicoïdale ; la rainure (50) étant ménagée dans le support (7) de mandrin et le pion (51) fixé au mandrin (45) ou inversement.

10. Dispositif selon la revendication 9, dans lequel la rainure (50) est fermée à ses deux extrémités (52) ; le dispositif comprenant en outre au moins une paire d'aimants (54,55) d'indexation montés de manière répulsive, l'un sur le support (7) de mandrin et l'autre sur le mandrin (15) de préhension, de manière que le pion (51) soit plaqué soit sur l'une soit sur l'autre des deux extrémités (52) de la rainure.

11. Dispositif selon l'une des revendications précédentes, dans lequel le corps (13,113) de butée comprend un moyen (14,114) d'indexation angulaire extérieur avec le corps (12,112) de guidage et un moyen (18-19;119) d'indexation angulaire intérieur avec le support (7,107) de mandrin ; le corps (12,112) de guidage étant monté libre en rotation dans un corps (11) principal du dispositif.

12. Dispositif selon les revendications 4, 10 et 11 prises dans leur ensemble, dans lequel le ou les aimants (54) d'indexation montés sur le support (7) de mandrin sont disposés chacun en regard d'un des premiers aimants (34) de rappel lorsque le support (7) de mandrin est dans la position de plongée et ont la même orientation magnétique que ledit premier aimant (34) de rappel.

13. Dispositif selon l'une des revendications précédentes, comprenant un moyen (119) sélectif d'indexation angulaire entre le corps (113) de butée et le support (117) de mandrin, présentant une pluralité de positions angulaires dans chacune desquelles la translation axiale est limitée par un système (170,171) de butées de supports permettant d'entraîner axialement le corps (113) de butée sur une partie différente de la course de plongée du support (117) de mandrin, différente pour chacune des positions angulaires.

14. Dispositif selon l'une des revendications précédentes, comprenant un moyen sélectif (114) d'indexation angulaire entre le corps (112) de guidage et le corps (113) de butée, présentant une pluralité de positions angulaires dans chacune desquelles la translation axiale du corps (113) de butée par rapport au corps de guidage est limitée par un système (163,164) de butées axiales de guidage définissant une position de retrait du corps de butée, différente pour chacune desdites positions angulaires.

15. Système de convoyage d'objets, comprenant un convoyeur (1,101) entraînant une pluralité de dispositifs (2,102) de préhension selon l'une des revendications précédentes, le système présentant une zone (61) de chargement et un moyen d'amenée des objets à charger sur un siège (9) de chargement ; l'axe (4) d'un dispositif de préhension étant perpendiculaire à la trajectoire (5a) d'entraînement des dispositifs lorsque ledit dispositif traverse la zone (61) de chargement, ledit dispositif coopérant avec un système (6) de came fixe pour entraîner axialement le support (7,107) de mandrin.

## Patentansprüche

1. Greifvorrichtung (2, 102) für einen Gegenstand wie einen Vorformling(3, 3a) zum Blasformen eines Behälters, umfassend:
- einen Führungskörper (12, 112);
- einen Anschlagkörper (13, 113), der gegenüber dem Führungskörper entlang einer Achse (4) der Vorrichtung axial verschiebbar montiert ist;
- eisen Träger (7, 107) des Dorns, der mit einem Greifdorn (15, 115) ausgestattet und gegenüber dem Führungskörper axial beweglich ist und einen Eintauchweg (8) von einer Einzugsposition bis zu einer Eintauchposition aufweist, in welcher der Dorn den Gegenstand (3) aufnehmen kann;
wobei der Anschlagkörper (13, 113) mit dem Träger des Dorns (15, 115) ein zusammengesetztes Trägeranschlagsystem (18-19; 170; 171) bildet, sodass der Dornträger den Anschlagkörper auf einem Endabschnitt (e2) des Eintauchwegs (8) axial antreibt,
**dadurch gekennzeichnet, dass** es ein Rückstellmittel (34-36, 134) zwischen dem Führungskörper und dem Anschlagkörper umfasst, um den Anschlagkörper in eine axiale Einzugsposition entgegengesetzt der Position des Eintauchwegs zu bewegen.

2. Vorrichtung nach Anspruch 1, in welcher der Anschlagkörper (13, 113) und der Führungskörper (12, 112) ein Führungsanschlagsystem (28 - 32; 163, 169) umfassen, welches die Axialverschiebung des Anschlagkörpers in Einzugsrichtung begrenzt.

3. Vorrichtung nach Anspruch 1 oder 2, in welcher der Anschlagkörper (13) und der Führungskörper (12) aus nichtmagnetischem Material bestehen und in welcher das Rückstellmittel mindestens einen Dauermagneten (34) umfasst, der auf einem der Körper der Führungs- oder Anschlagkörper montiert ist, sowie ein Element (36) aus magnetischem Material, das auf dem anderen Körper der Führungs- und Anschlagkörper montiert ist.

4. Vorrichtung nach Anspruch 3, in welcher das Rückstellmittel mindestens ein Paar (34, 36) Rückstellmagnete bestehend aus einem ersten Dauermagneten (34) auf dem Führungskörper und einem zweiten Dauermagneten (36) auf dem Anschlagkörper (13) umfasst; wobei die magnetischen Achsen des ersten und zweiten Magneten senkrecht zur Achse (4) der Vorrichtung stehen und sich auf derselben radialen Halbebene befinden; wobei die magnetische Achse des ersten Magneten gegenüber der magnetischen Achse des zweiten Magneten versetzt entlang der Achse (4) der Vorrichtung ist, und zwar in Eintauchrichtung, wenn sich die beiden Magneten (34, 36) gegenseitig anziehen und in Einzugsrichtung, wenn sich die beiden Magneten gegenseitig abstoßen.

5. Vorrichtung nach Anspruch 4, die eine Vielzahl von Magnetpaaren (34 - 36) umfasst, wobei die ersten Magneten (34) jedes Paares identisch sind, wobei die zweiten Magneten (36) jedes Paares identisch sind, wobei die Halbebenen gleichmäßig um die Achse (4) der Vorrichtung verteilt sind und wobei die axialen Versatzstrecken (d1, d2) jedes Paares identisch sind.

6. Vorrichtung nach einem der vorangehenden Ansprüche, in welcher der Anschlagkörper (13) eine Sitzfläche (40) aufweist, die sich in radialer Richtung erstreckt und sich am Eintauchende des Anschlagkörpers (13) befindet; wobei die Vorrichtung außerdem eine abnehmbare Anpsssungsscheibe (39) zur Befestigung auf der Sitzfläche (40) umfasst.

7. Vorrichtung nach den Ansprüchen 5 und 6 in ihrer Gesamtheit, die eine Vielzahl von Magneten (41) zur Befestigung der Anpassungsscheibe (39) auf dem Anschlagkörper (13) umfasst; wobei die Magnete (41) zur Befestigung des Anschlagkörpers zwischen den zweiten Rückstellmagneten (76) um die Achse (4) der Vorrichtung angeordnet sind.

8. Vorrichtung nach einem der vorangehenden Ansprüche, die ein axiales, selektives Indexierungsmittel (16, 116) zwischen dem Träger (7, 107) des Dorns (15, 115) und dem Greifdorn umfasst, wodurch mehrere Extrempositionen des Greifdorns (15, 115) für eine gleiche Eintauchposition des Dornträgers (7, 107) bestimmt werden.

9. Vorrichtung nach Anspruch 8, in welcher das axiale, selektive Indexierungsmittel (16) eine Nut (50) umfasst, die zwei parallele Wände aufweist, zwischen denen ein Zapfen (51) gleitet; wobei mindestens ein Teil der Nut (50) schraubenförmig ist; wobei die Nut (50) im Dornträger (7) vorhanden und der Zapfen (51) am Dorn (45) befestigt ist oder umgekehrt

10. Vorrichtung nach Anspruch 9, in welcher die Nut (50) an ihren beiden Enden (52) geschlossen ist; wobei die Vorrichtung außerdem mindestens ein Indexierungsmagnetpaar (54, 55) umfasst, das in einer sich gegenseitig abstoßenden Position montiert ist, wobei sich ein Magnet auf dem Dornträger (7) und der andere auf dem Greifdorn (15) befindet, sodass der Zapfen (51) entweder gegen das eine oder das andere Ende der beiden Enden (52) der Nut gedrückt wird.

11. Vorrichtung nach einem der vorangehenden Ansprüche, in welcher der Anschlagkörper (13, 113) ein äußeres Winkelindexierungsmittel (14, 114) mit dem Führungskörper (12, 112) sowie ein inneres Winkelindexierungsmittel (18-19; 119) mit dem Dornträger (7,107) umfasst; wobei der Führungskörper (12, 112) frei drehbar in einem Hauptkörper (11) der Vorrichtung angebracht ist.

12. Vorrichtung nach den Ansprüchen 4, 10 und 11 in ihrer Gesamtheit, in welcher der oder die auf den Dornträger (7) montierten Indexierungsmagnete (54) jeweils gegenüber einem der ersten Rückstellmagnete (34) angeordnet sind, wenn sich der Dornträger (7) in der Eintauchposition befindet, und sie dieselbe magnetische Ausrichtung wie der erste Rückstellmagnet (34) haben.

13. Vorrichtung nach einem der vorangehenden Anspruch, die ein selektives Winkelindexierungsmittel (119) zwischen dem Anschlagkörper (113) und dem Dornträger (117) umfasst und eine Vielzahl von Winkelpositionen aufweist, in denen jeweils die Axialverschiebung durch ein Trägeranschlagsystem (170, 171) begrenzt ist und so der Anschlagkörper (113) in Axialrichtung auf einem für jede Winkelposition anderen Teil des Eintauchwegs des Dornträgers (117) angetrieben wird.

14. Vorrichtung nach einem der vorangehenden Ansprüche, die ein selektives Winkelindexierungsmittel (114) zwischen dem Führungskörper (112) und dem Anschlagkörper (113) umfasst und eine Vielzahl von Winkelpositionen aufweist, in denen jeweils die Axialverschiebung des Anschlagkörpers (113) in Bezug auf den Führungskörper durch ein axiales Führungsanschlagsystem (163, 164) begrenzt ist und so eine für jede Winkelposition unterschiedliche Einzugsposition des Anschlagkörpers bestimmt wird.

15. Fördersystem für Gegenstände, das einen Förderer (1, 101) umfasst, der eine Vielzahl von Greifvorrichtungen (2, 102) nach einem der vorrangehenden Patentansprüche antreibt, wobei das System einen Beschickungsbereich (61) und ein Zuführmittel für auf einen Beschickungssitz (9) abzusetzende Gegenstände umfasst; wobei die Achse (4) einer Greifvorrichtung senkrecht zur Antriebsbahn (5a) der Vorrichtungen ist, wenn die Vorrichtung den Beschickungsbereich (61) durchquert, wobei die Vorrichtung zum axialen Antrieb des Dornträgers (7, 107) mit einem Festnockensystem (6) zusammenwirkt.

## Claims

1. Device (2,102) for gripping an object such as a blow-moulding container preform (3, 3a), comprising:
- a guiding body (12, 112) ;
- a stop body (13, 113), mounted so as to move axially relative to the guiding body along an axis (4) of the device;
- a mandrel support (7,107), equipped with a gripping mandrel (15,115), able to move axially relative to the guiding body and having an insertion stroke (8) going from a retracted position to an insertion position in which the mandrel is capable of gripping the object (3);
the stop body (13, 113) having, together with the mandrel support (15, 115), a system (18-19;170;171) of support stops arranged so that the mandrel support drives the stop body axially over an end portion (e2) of the insertion stroke (8),
**characterized in that** said device comprises a return means (34-36,134) mounted between the guiding body and the stop body, for the purpose of driving the stop body in an axial retraction direction that is opposite the direction of the insertion stroke.

2. Device according to claim 1, wherein the stop body (13, 113) and the guiding body (12, 112) comprise a system (28-32;163;169) of guiding stops that limit the axial movement of the stop body in the retraction direction.

3. Device according to claim 1 or 2, wherein the stop body (13) and the guiding body (12) are of non-magnetic material, and wherein the return means comprises at least one permanent magnet (34) mounted onto one of either the guiding body or stop body and an element (36) of magnetic material mounted on the other of the guiding body or stop body.

4. Device according to claim 3, wherein the return means comprises at least one pair (34, 36) of return magnets consisting of a first permanent magnet (34) mounted on the guiding body (12) and a second permanent magnet (36) mounted on the stop body (13); the magnetic axes of the first and second permanent magnets being perpendicular to the axis (4) of the device and being situated in the same radial half-plane, the magnetic axis of the first permanent magnet being offset along the axis (4) of the device relative to the magnetic axis of the second permanent magnet, in the insertion direction if the two permanent magnets (34, 36) are mutually attracting and in the retraction direction if the two permanent magnets are mutually repelling.

5. Device according to claim 4, comprising a plurality of pairs (34-36) of magnets, the first magnets (34) of each pair being identical, the second magnets (36) of each pair being identical, the half-planes being uniformly distributed around the axis (4) of the device, and the axial offset distances (d1, d2) for each pair being identical.

6. Device according to any one of the above claims, wherein the stop body (13) has a radially extending seating surface (40) located at the insertion end of the stop body (13); said device additionally comprising a removable adapter washer (39) intended to be attached to said seating surface (40).

7. Device according to both claims 5 and 6 together, comprising a plurality of attachment magnets (41) for attaching the adapter washer (39) to the stop body (13); the attachment magnets (41) of the stop body being arranged around the axis (4) of the device so as to come in between the second permanent return magnets (76).

8. Device according to any one of the preceding claims, comprising a selective means (16, 116) of axial indexing between the mandrel (15, 115) support (7, 107) and the gripping mandrel, defining several extreme positions of the gripping mandrel (15, 115) for the same insertion position of the mandrel support (7,107).

9. Device according to claim 8, wherein the selective axial indexing means (16) comprises a groove (50) having two parallel walls which a pin (51) slides between; at least a portion of the groove (50) being helicoid; the groove (50) being arranged in the mandrel supports (7) and the pin (51) being attached to the mandrel (45), or the groove being arrange in the mandrel (45), and the pin being attached to the mandrel support (7).

10. Device according to claim 9 wherein the groove (50) is closed at its two ends (52); said device additionally comprising at least one pair of indexing magnets (54, 55) mounted so they are repelling, one on the mandrel support (7) and the other on the gripping mandrel (15), such that the pin (51) is pressed against one of the two ends (52) of the groove.

11. Device according to any one of the above claims, wherein the stop body (13, 113) comprises an external angular indexing means (14, 114) with the guiding body (12,112) and an internal angular indexing means (18-19;119) with the mandrel support (7,107); the guiding body (12,112) being assembled to rotate freely in a main body (11) of the device.

12. Device according to claims 4, 10 and 11 all together, wherein the indexing magnet or magnets (54) mounted on the mandrel support (7) are each facing one of the first permanent return magnets (34) when the mandrel support (7) is in the insertion position and have the same magnetic orientation as said first permanent return magnet (34).

13. Device according to any one of the above claims, comprising a selective angular indexing means (119) between the stop body (113) and the mandrel support (117), having a plurality of angular positions in each of which the axial movement is limited by a system (170,171) of support stops which allow driving the stop body (113) axially over a different portion of the insertion stroke of the mandrel support (117), different for each of the angular positions.

14. Device according to any one of the above claims, comprising a selective angular indexing means (114) between the guiding body (112) and the stop body (113), having a plurality cf angular positions in each of which the axial movement or the stop body (113) relative to the guiding body is limited by a system (163,164) of axial guiding stops defining a retracted position of the stop body that is different for each of said angular positions.

15. System for conveying objects, comprising a conveyor (1,101) that conveys a plurality of gripping devices (2,102) according to any one of the preceding claims, said system having a loading area (61) and a means of bringing objects to be loaded on a loading seat (9); the axis (4) of a gripping device being perpendicular to the path (5a) said device follows as it passes through the loading area (61), said, device cooperating with a fixed position cam system (6) to drive the mandrel support (7,107) axially.
